Europäisches Patentamt

European Patent Office

Office européen des brevets

(11) Publication number: **0 309 156**
**A1**

## (12) EUROPEAN PATENT APPLICATION

(21) Application number: 88308554.0

(22) Date of filing: 16.09.88

(51) Int. Cl.⁴: **A01K 39/00**

(30) Priority: 23.09.87 IE 2566/87

(43) Date of publication of application:
**29.03.89 Bulletin 89/13**

(84) Designated Contracting States:
**AT BE CH DE ES FR GB GR IT LI LU NL SE**

(71) Applicant: **Duggan, Bartley**
**"Beaulieu" Lackenroe**
**Glounthaune County Cork(IE)**

(72) Inventor: **Duggan, Bartley**
**"Beaulieu" Lackenroe**
**Glounthaune County Cork(IE)**

(74) Representative: **Woodward, John Calvin et al**
**VENNER SHIPLEY & CO. 368 City Road**
**London EC1V 2QA(GB)**

(54) A bird feeding and observation device.

(57) A bird feeding and observation device (40) comprises a pair of side walls (41, 42); a removable base (43); and a removable back wall (44). The side walls (41, 42) are interconnected by three perches each of which passes through respective in register holes (56, 57, 58). Adhesive pads (95, 96) enable the device (40) to be mounted on the outside face of a window panel of a room of a house. Food placed in the device (40) will attract wild birds which may be observed and photographed at close quarters. If desired, the back wall (44) may comprise a material which provides a one-way mirror so that the birds cannot see the observer in the room.

FIG 4

## A BIRD FEEDING AND OBSERVATION DEVICE

This invention relates to a bird feeding and observation device. In particular, it relates to a bird feeding and observation device for birds in the wild.

The invention therefore provides a bird feeding and observation device which comprises two side walls in parallel spaced apart relationship interconnected by at least one perch means: and means for releasably mounting the device to the outside surface of the window of a building so that the walls are substantially normal relative to the building.

Preferably, the device further comprises a frame having, in use, a substantially horizontally disposed U-shaped member and two upstanding elements disposed. in use, adjacent the window and wherein one end of each of the elements is disposed at a respective corner of the U-shaped member which U-shaped member together with the elements support said side walls.

Preferably, each wall comprises a panel member having at least three side edges at least two of which are substantially normal relative to each other and constitute, in use, a rear edge and a base edge; the rear edge having a first wing-like flange member disposed transversely thereon; and the base edge having a similar second wing-like flange member disposed transversely thereon and wherein, in use, the first flange members of the panel members are co-planar and the second flange members of the panel members are co-planar

Preferably, the rear edge terminates in a first cut-out portion: and the base edge terminates in a second cut-out portion which cut-out portions share a common corner said corner having an L-shaped wing-like flange member having a first leg and a second leg disposed substantially transversely thereon, the first leg together with an extension portion of the first flange member forming a first slot for receiving a transparent rear wall and the second leg together with an extension portion of the second flange member forming a second slot for receiving a base.

Preferably, each of said extension portions is curved inwardly in the direction of the corner to provide respective slots each having.in cross-section, an opening which tapers in the direction of the corner.

Preferably, each of said extension portions has sufficient resilience to provide a biasing effect in the direction of respective first and second legs.

Preferably, at least one face of the panel member is provided with a first projection mounted in parallel spaced apart relationship relative to the first flange member for providing additional support for the rear wall.

Preferably, said face is provided with a second projection mounted in parallel spaced apart relationship relative to the second flange member for providing additional support for the base.

Preferably, the walls, base and rear wall are made from a transparent material.

Preferably. the rear wall comprises a one-way mirror presenting a transparent wall to a viewer inside the building and a mirror to a viewer outside the building.

The invention will be understood in greater detail from the following description of preferred embodiments thereof given by way of example only and with reference to the accompanying drawings in which: -

Figure 1 is a perspective view of a first embodiment of a bird feeding and observation device according to the invention mounted on a window pane;

Figure 2 is a detailed perspective view of the device of Figure 1 of the drawings;

Figures 2a. 2b, and 2c each show parts of Figures 2 of the drawings in enlarged detail;

Figure 3 is a perspective view of part of the device of Figure 1 of the drawings:

Figure 3a is a plan view of the part of Figure 3 of the drawings:

Figure 4 is a perspective view of a second embodiment of a bird feeding and observation device with perches absent therefrom;

Figure 5 is a perspective and enlarged view of one of the walls of the device of Figure 4 of the drawings and

Figure 6 is a perspective and enlarged view of part of the device of Figure 4 of the drawings.

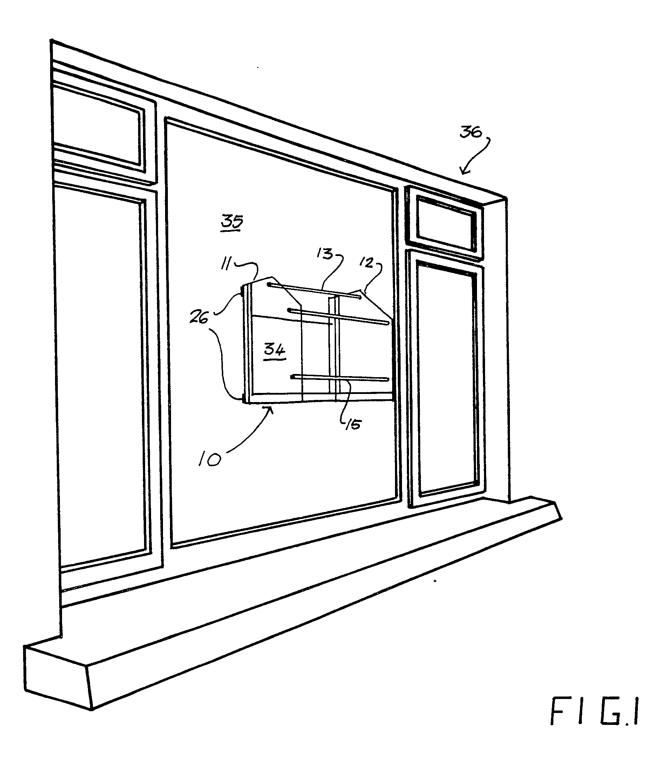

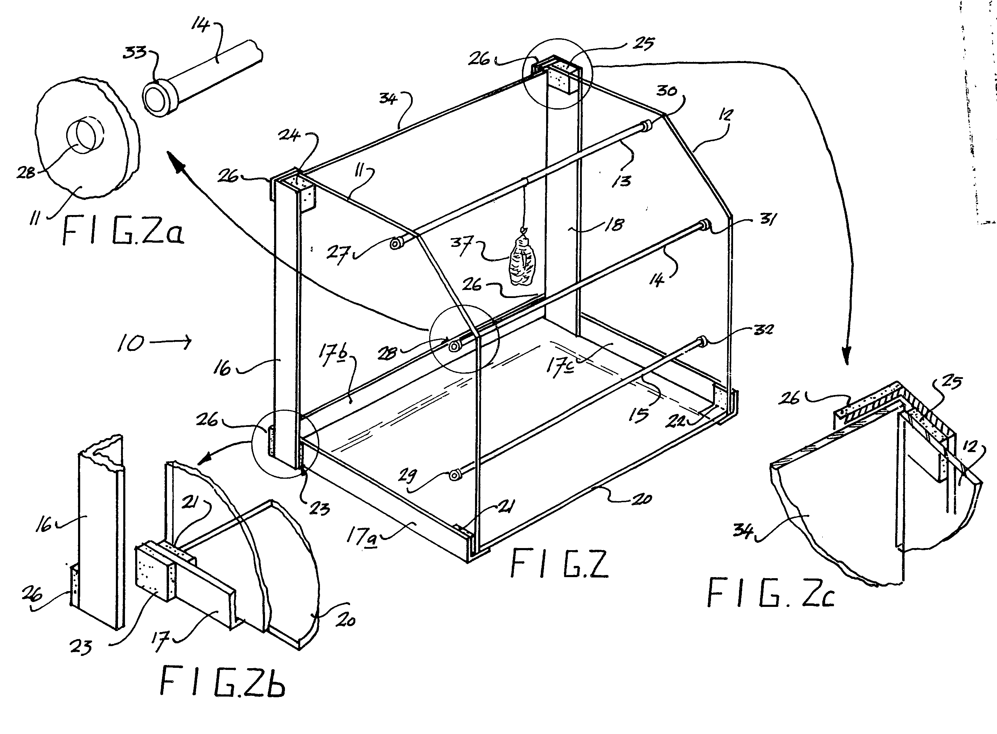

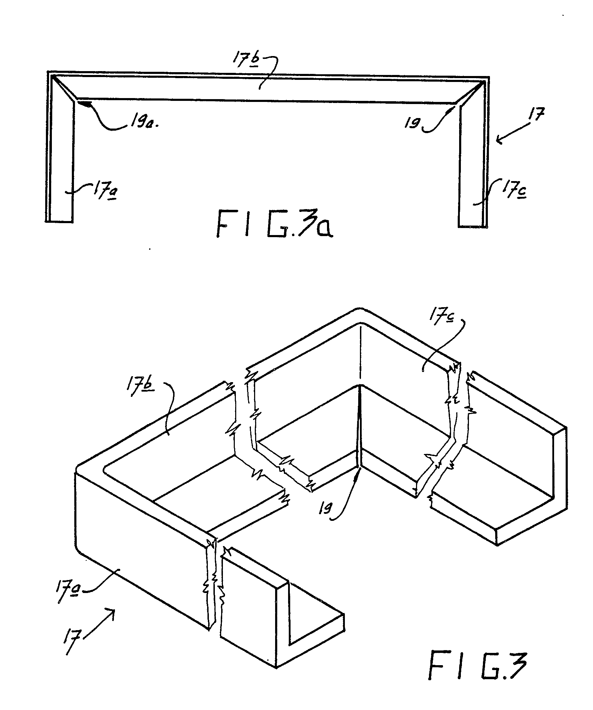

Referring now to the drawings and in particular to Figures 1 - 3a thereof, there is shown a bird feeding and observation device 10 according to the invention which essentially comprises a pair of side walls 11, 12 interconnected by three perches 13, 14 and 15. Each of the walls 11, 12 is made from a transparent material such as Perspex (Trade Mark). In order to provide a more rigid construction two L-shaped elements 16 and 18 and a U-shaped member 17 are provided.

The elements 16, 18 form a pair of upright elements while the member 17 essentially comprise three L-shaped elements 17a, 17b, and 17c having open corner joints 19, 19a.

A base 20 made from Perspex may be provided. The base 20 is removable for cleaning purposes and, accordingly, passively rests on the horizontally disposed U-shaped member 17.

As the device 10 is intended to be sold in kit form, the components will be assembled by the user. Accordingly, adhesive pad supports are provided to be mounted on suitable interface locations of the device 10. The adhesive pads are of the type having two opposing adhesive surfaces exposed as required by a peel-back strip. Thus, the U-shaped member 17 has adhesive pads 21, 22 thereon for securing respective walls 11, 12 thereto.

The upright element 16 is secured to the U-shaped member 17 by means of an adhesive pad 23; and further is secured to the side wall 11 by means of an adhesive pad 24. The upright element 18 is secured to the U-shaped member 17 by means of an adhesive pad (not shown) similar to the pad 23; and further is secured to the side wall 12 by means of an adhesive pad 25. Adhesive pads 26 are also provided on the upright elements of 16, 18 at the locations shown.

The side wall 11 has three holes 27, 28 and 29 therein; the side wall 12 has three holes 30, 31 and 32 therein. In the assembled condition, the holes 27 and 30 are in register; the holes 28 and 31 are in register; and the holes 29 and 32 are in register. The holes 27-32 are adapted to support the perches 13, 14 and 15. To secure the ends of each perch 13-15 within its respective hole, adhesive pads 33 are provided on the ends of each perch 13-15.

If desired, a back wall 34 may be provided. The back wall 34 is preferably made from a material which provides a mirror surface when viewed from the perch side thereof and provides a transparent surface when viewed from the other side thereof. The back wall 34 is retained in position by the edges of the side walls 11, 12 and upright elements 16, 18. The back wall 34 is removable for cleaning.

As indicated above, the device 10 will be sold in kit form to be assembled by the user. The user having assembled the device 10 will then select a suitable location for mounting it.

A preferred location for the device 10 is on the outside of a pane of glass 35 of a window 36. The back wall 34, although not essential, should be used for two reasons. Firstly, to avoid undue soiling of the glass 35 by the feeding birds and secondly, to enable an observer inside the building or house to view the activities of the feeding birds without being seen by the birds.

If desired, a net food bag 37 may be hung from the perch 13. Food and water may also be placed on the base 20.

The device 10 provides a suitable safe housing for wild birds to feed while being observed from the building or house and further, without the danger of cats or other animals having access to the birds or their food.

The base 20 and the back wall 34 may be removed for cleaning as desired without the necessity to remove the device from the glass 35.

If repeated mounting and removal of the device 10 from the glass 35 is desired, the pads 26 be replaced by fresh clean pads if desired.

As a guide to the dimensions of the device, the base 20 is approximately 400mm x 300mm and each side wall 11, 12 is 300mm x 400mm at its highest approximately. The back wall 34 has dimensions 400mm x 400mm approximately.

If desired, the elements 16, 17a, 17c and 18 may be T-shaped to enable a second, third or series of devices to be mounted together.

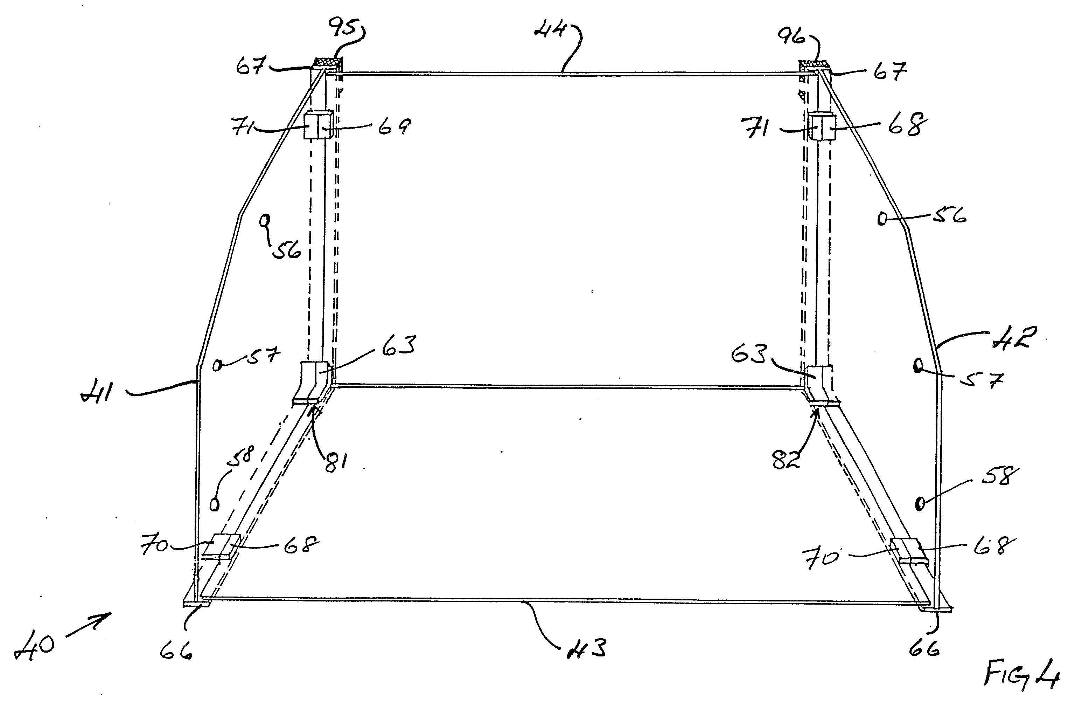

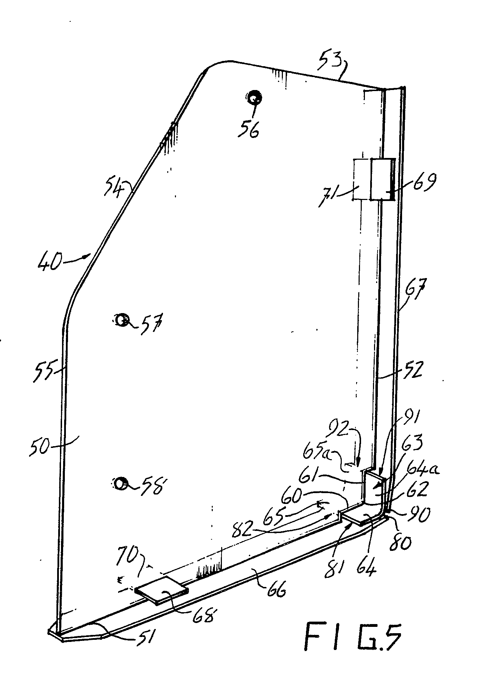

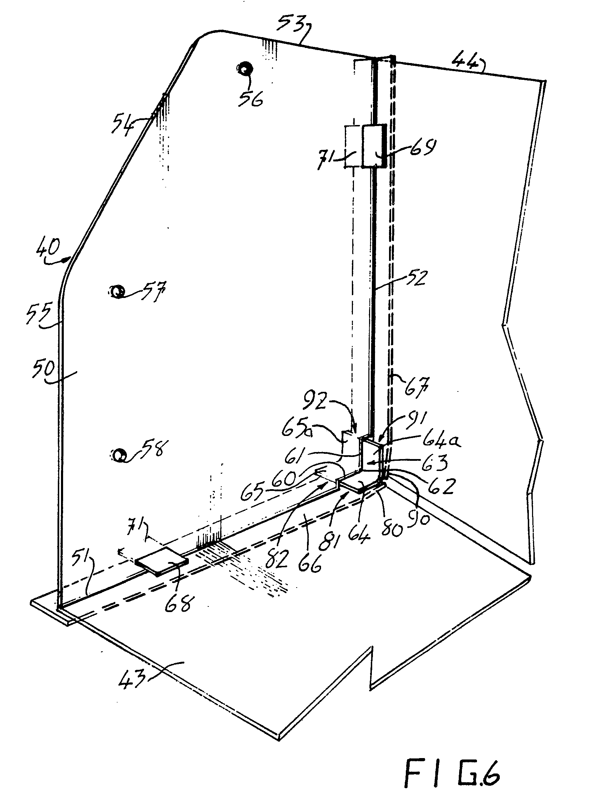

Referring now to Figures 4 - 6 of the drawings, there is shown a second embodiment of a bird feeding and observation device 40 according to the invention which comprises a pair of side panel members 41, 42, a base 43 and a back wall 44. The side panel members 41, 42 are similar and one of them, 41 is shown in detail in Figure 5 of the drawings. The side panel member 41 comprises a panel 50 having five edges 51, 52, 53, 54 and 55. In the panel 50 are three holes 56, 57 and 58 for supporting one end of a perspective perch (not shown). One end of the edge 51 terminates in a cut-out portion 60; one end of the edge 52 terminates in a cut-out portion 61. The cut-out portions 60, 61 share a common corner 62.

At the corner 62 and integral with the cut-out portions 60, 61 is an L-shaped flange member 63. The flange member 63 comprises legs 64, 64a, 65 and 65a which project on either side of the panel 50. On the edge 51 and integral therewith is a transversely disposed wing-like flange member 66 which projects on either side of the panel 50.

On the edge 52 and integral therewith is a transversely disposed wing-like flange member 67 which projects on either side of the panel 50. Mounted on one face of the panel 50 and in parallel spaced apart relationship relative to the flange member 66 in a rectangularly shaped projection 68. On the same face of the panel 50 but in parallel spaced apart relationship relative to the flange member 67 is a rectangularly shaped projection 69. On the opposite face of the panel 50 are similar projections 70, 71 in parallel spaced apart relationship relative to the flange members 66, 67 respectively.

The wing-like flange member 66, as indicated above, is integral with the edge 51. However, the member 66 has an extension 80 which enables it to project beyond the edge 51 at the cut-out portion 60. Together with the legs 64, 65, the extension 80 forms respective slots 81, 82. Similarly, the member 67 has an extension 90 which together with the legs 64a, 65a form respective slots 91, 92. The extensions 80, 90 are non-linear relative to there respective members 66, 67 each having a curve which enables them to project inwardly towards the flange member 63. There is thus generated slots 81, 82, 91, 92 which, in cross-section, have a respective opening which tapers in the direction of the corner 62. The extensions 80, 90 have sufficient resilience to enable them to be prised away from the legs 64, 64a, 65 and 65a but which extensions 80, 90 exert a biasing effect in the direction of respective legs 64, 64a, 65, 65a.

To assemble the device 40, one edge of the base 43 slidably engages with the side panel member 41. Specifically, the edge of the base 43 is placed on the flange member 66 and moved in the direction of the projection 68. The edge will be sandwiched between the flange member 66 and the projection 68. Further sliding movement of the edge of the base 43 relative to the side panel member 41 will enable the edge to be sandwiched between the extension 80 and the leg 64. The thickness of the base 43 is such as to cause the extension 80 to be pushed away from the leg 64, 65 thereby providing a tight fit for the edge of the base 43 in the slot 81.

The opposite edge of the base 43 is retained in a similar fashion in the slot 82 of the side panel member 42 and between the wing-like flange member 66 and the projection 70.

One edge of the back wall 44 slidably engages between the flange member 67 and the projection 69 and into the slot 91 being releasably retained therein in a manner similar to that described with respect to the base 43. Similarly, the opposite edge of the back wall 44 is releasably retained in the slot 92 of the side panel member 42 and between the wing-like flange member 67 and the projection 71.

Three perches (not shown) are mounted so as to engage with respective pairs of holes 56, 57 and 58. The device 40 is mounted on a window panel using adhesive pads 95, 96. Other adhesive pads (not shown) located in the region of the extensions 90 may be provided.

The back wall 44 is preferably made from a material which provides a mirror surface when viewed from the perch side thereof and a transparent surface when viewed from the other side thereof.

The base 43 and the back wall 44 are removable for cleaning as desired without the necessity to remove the device 40 from the glass 35. By mounting the device 40 according to the invention on the glass 35 wild birds may be observed and photographed at close quarters. Although it is not essential to use a base and/or a back wall, it will be appreciated that soiling of the ground and the glass 35 may be avoided by their use. A distinct advantage of observation may be obtained by using a back wall formed from a material providing a one-way mirror. Such materials are well-known.

It will be appreciated that having mounted the device 10 or 40 on the glass 35 it will take some time for the wild birds to become accustomed to its presence and safety of use. However, if suitable food is placed in the device 10 or 40, wild birds will visit particularly during winter months and professional as well as amateur ornithologists can observe the birds at relatively close quarters.

The device 10 or 40 may be mounted on a surface other than the window of a building but it will be appreciated that the device according to the invention is designed primarily for domestic use.

## Claims

1. A bird feeding and observation device (10, 40) characterised in that the device (10, 40) comprises two side walls (11, 12, 41, 42) in parallel spaced apart relationship interconnected by at least one perch means (28); and means (26, 95, 96) for releasably mounting the device (10, 40) to the outside surface of the window (35) of a building (36) so that the side walls (11, 12, 41, 42) are substantially normal relative to the building.

2. A device as claimed in claim 1 which further comprises a frame having, in use, a substantially horizontally disposed U-shaped member and two upstanding elements disposed, in use, adjacent the window and wherein one end of each of the elements is disposed at a respective corner of the U-shaped member which U-shaped member together with the elements support said side walls.

3. A device as claimed in claim 2 wherein the U-shaped member is L-shaped in cross-section for supporting a base.

4. A device as claimed in any of claims 2 - 3 which further comprises a rear wall in the form of a one-way mirror supported by the U-shaped member and the elements which one-way mirror, in use, presents to a viewer inside the building a substantially transparent wall and to the viewer outside a building a mirror.

5. A device as claimed in claim 1 wherein each wall comprises a panel member having at least three side edges at least two of which are substantially normal relative to each other and constitute, in use, a rear edge and a base edge; the rear edge having a first wing-like flange member disposed transversely thereon; and the base-edge having a similar second wing-like flange member disposed transversely thereon and wherein, in use, the first flange members of the panel members are co-planar and the second flange members of the panel members are co-planar.

6. A device as claimed in claim 5 wherein the rear edge terminates in a first cut-out portion; the base edge terminates in a second cut-out portion which cut-out portions share a common corner said corner having an L- shaped wing-like flange member having a first leg and a second leg disposed substantially transversely thereon, the first leg together with an extension portion of the first flange member forms a first slot for receiving a back wall and the second leg together with an extension portion of the second flange member forms a second slot for receiving a base.

7. A device as claimed in claim 6 wherein each of said extension portions is curved inwardly in the direction of the corner to provide respective slots each having in cross-section, an opening which tapers in the direction of the corner.

8. A device as claimed in claim 7 wherein each of said extension portions has sufficient resilience to provide a biasing effect in the direction of respective first and second legs.

9. A device as claimed in any of claims 6 - 8 wherein at least one face of the panel member is provided with a first projection mounted in parallel spaced apart relationship relative to the first flange member for providing additional support for the back wall.

10. A device as claimed in claim 9 wherein said face is provided with a second projection mounted in parallel spaced apart relationship relative to the second flange member for providing additional support for the base.

11. A device as claimed in any of claims 6 - 10 wherein the wall is in the form of a one-way mirror which, in use, presents to a viewer inside the building a substantially transparent wall and to a viewer outside the building a mirror.

12. A device as claimed in any of claims 5 - 11 wherein the panel members are transparent.

FIG.1

33
14
28
11
FIG.2a

24
26
34
11
27
37
26
28
17b
16
10
17a
26
23

25
26
30
13
12
18
14
31
17c
32
15
22
29
21
20
FIG.2

16
26
23
21
17
20
FIG.2b

26
25
12
34
FIG.2c

EP 0 309 156 A1

17b

19a.

19

17

17a

17c

FIG.3a

17c

17b

19

17a

17

FIG.3

Fig. 4

FIG.5

FIG.6

European Patent
Office

**EUROPEAN SEARCH REPORT**

EP 88 30 8554

| Category | Citation of document with indication, where appropriate, of relevant passages | Relevant to claim | CLASSIFICATION OF THE APPLICATION (Int. Cl.4) |
|---|---|---|---|
| X | US-A-3 291 100 (E.O. NEGAARD) * complete document * | 1 | A 01 K 39/00 |
| A | | 4,11,12 | |
| A | AT-B- 124 069 (P. VOIT) * complete document * | 1 | |

**TECHNICAL FIELDS SEARCHED (Int. Cl.4)**

A 01 K 39/00

The present search report has been drawn up for all claims

| Place of search | Date of completion of the search | Examiner |
|---|---|---|
| BERLIN | 12-12-1988 | WUNDERLICH J E |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.....................................................................
& : member of the same patent family, corresponding
   document

EPO FORM 1503 03.82 (P0401)